# EUROPEAN PATENT APPLICATION

(11) **EP 3 295 783 A1**
(43) Date of publication of application: **21.03.2018**
(21) Application number: 16792785.4
(22) Date of filing: 13.05.2016
(51) Int. Cl.: A01D 34/78, B25F 5/00, H01M 2/10, H01M 10/48, H02J 7/00

(54) **PORTABLE ELECTRIC WORK MACHINE, AND BATTERY PACK**

(30) Priority: 14.05.2015 JP 2015099298
(71) Applicant: Oppama Industry Co., Ltd, Yokosuka-shi, Kanagawa 237-0061 (JP)
(72) Inventor: IWATA, Masao, Yokosuka-shi Kanagawa 237-0061 (JP); OKUDERA, Izumi, Yokosuka-shi Kanagawa 237-0061 (JP); KATO, Masaaki, Yokosuka-shi Kanagawa 237-0061 (JP); WATANABE, Hiromi, Yokosuka-shi Kanagawa 237-0061 (JP); ENOMOTO, Kiyoshige, Yokosuka-shi Kanagawa 237-0061 (JP)
(74) Representative: Plougmann Vingtoft a/s
(86) International application number: PCT/JP2016/064293
(87) International publication number: WO 2016/182061

(57) **Abstract**

The purpose of the present invention is to enable data which can be effectively utilized in maintenance work to be acquired from a work-machine main body, in a portable electric work machine capable of having a battery pack attached thereto and detached therefrom. This portable electric work machine (1) is provided with: a battery pack (200) provided with a battery (210) and a memory (230); and a work-machine main body (100). The work-machine main body (100) is provided with: a work unit (130) for performing prescribed work; a work-machine controller (111); and a memory (113). When the battery pack (200) is attached to the work-machine main body (100), information corresponding to information related to the purchase date or sale date and stored in memory (230) is saved in memory (113).

## Description

### [Technical Field]

The present invention relates to a portable electric work machine, a battery pack therefor, and the like.

### [Background Art]

PTL1 describes a portable work machine that includes an internal combustion engine and is driven by this internal combustion engine, the machine being capable of storing operation data on the engine in a data memory in a casing and of reading the data from the outside. The read data is utilized for the maintenance work.

### [Citation List]

### [Patent Literature]

[PTL1] Japanese Patent Laid-Open No. 2008-44097

### [Summary of Invention]

### [Technical Problem]

Incidentally, there are portable electric work machines which battery packs can be attached to and detached from. Also in the case of such a type of machines, if operation record data is stored in an internal memory and can be read from the outside, the data can be effectively utilized for the maintenance work. Furthermore, in view of maintenance, it is desirable that in addition to the operation record data, the sale date or purchase date (or the date of starting usage) of the portable electric work machine be stored in the memory of the work-machine main body.

The present invention has an object to enable data which can be effectively utilized in maintenance work to be acquired from a work-machine main body, in a portable electric work machine capable of having a battery pack attached thereto and detached therefrom.

The present invention has another object to store the data on the sale date and the purchase date in the work-machine main body in a manner readable from the outside, in the portable electric work machine to which the battery pack can be attached and detached.

### [Solution to Problem]

A portable electric work machine according to one aspect of the present invention, includes: a battery pack that includes a battery, and a first memory that is a memory configured to store predetermined information; and a work-machine main body configured to be allowed to operate with power being supplied from the battery when the battery pack is mounted. The work-machine main body includes: a work unit for a predetermined operation driven by the power from the battery; a controller configured to control the work unit; and a second memory that is a memory accessible from the controller, and with the battery pack being mounted on the work-machine main body, information corresponding to information related to a purchase date or a sale date stored in the first memory is written in the second memory.

A portable electric work machine according to one aspect of the present invention, includes: a battery pack that includes a first memory that is a memory accessible from a battery and an outside; and a work-machine main body configured to be allowed to operate with power being supplied from the battery when the battery pack is mounted. The work-machine main body includes: a work unit for a predetermined operation driven by the power from the battery; and a controller configured to control the work unit, a second memory that is a memory accessible from the controller. When information related to a purchase date or a sale date is not stored in the second memory, the controller writes, in the second memory, the information related to the purchase date or the sale date according to information stored in the first memory.

In a preferred aspect, the battery pack may be in either a sleep state or an active state, when the state of the battery pack is switched from the sleep state to the active state, the information related to the purchase date or the sale date of the battery pack may be stored in the first memory.

In a preferred aspect, the controller may obtain the information stored in the first memory, via a member that is included in the battery pack and is used during charging of the battery.

In a preferred aspect, the member used during charging of the battery included in the battery pack may be a communication line for allowing the battery pack to transmit and receive charge control information to and from a charger during charging of the battery.

A battery pack according to one aspect of the present invention, includes: a cover member; a battery accommodated in the cover member; and a memory that is accommodated in the cover member and is configured to store information related to a purchase date and a sale date. The memory is accessible from an outside of the cover member via a predetermined interface.

In a preferred aspect, the predetermined interface may be a member configured to be used during charging of the battery.

In a preferred aspect, the member used during charging of the battery may be a communication line configured to allow the battery pack to transmit and receive charge control information to and from a charger during charging of the battery.

In a preferred aspect, the predetermined interface may be a USB (Universal Serial Bus).

In a preferred aspect, the predetermined interface may be wireless communication means.

### [Brief Description of Drawings]

[Fig. 1] Fig. 1 is an overall configuration diagram of an electric brush cutter according to an embodiment of the present invention.
[Fig. 2] Fig. 2 is a front view of a right grip 125a.
[Fig. 3] Fig. 3 is a functional block diagram of the electric brush cutter 1 in a case where a battery pack 200 is mounted on a battery holder 190.
[Fig. 4] Fig. 4 is a functional configuration diagram in a case where the battery pack 200 is coupled to a battery charger 300.
[Fig. 5] Fig. 5(A) is a configuration diagram of the appearances of the battery pack 200 and a state management device 400 that manages the state of the battery pack 200. Fig. 5(B) is a functional configuration diagram in a case where the battery pack 200 is mounted on the state management device 400.
[Fig. 6] Fig. 6 is a flowchart showing processing procedures performed by the state management device 400 in order to manage the state of the battery pack 200.
[Fig. 7] Fig. 7 is a flowchart showing processes performed by the battery pack 200 and the charger 300 while the battery pack 200 is mounted on the charger 300 to charge this charger.
[Fig. 8] Fig. 8 is a flowchart showing processes performed by a brush cutter main body 100 and the battery pack 200 when the battery pack 200 is mounted on the brush cutter main body 100 and a power source switch 151 is operated to turn on the power source.
[Fig. 9] Fig. 9 is a flowchart showing processing procedures of a terminal device for maintenance works.

### [Description of Embodiments]

Hereinafter, a portable electric work machine according to an embodiment of the present invention is described with reference to the drawings. Here, the portable electric work machine is a portable work machine driven by a battery, and may be a work machine for operations in a hand-held manner, or a work-machine to be carried on the back. The following embodiments are described, exemplifying an electric brush cutter with reference to an example of the portable electric work machine.

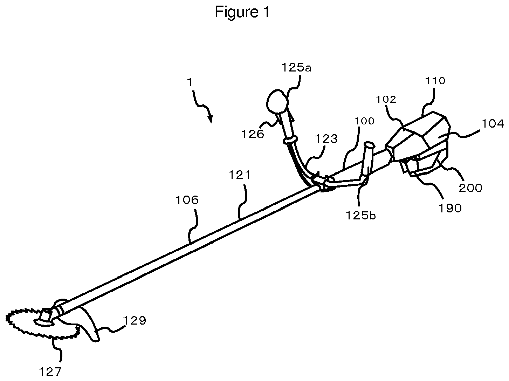

Fig. 1 is an overall configuration diagram of an electric brush cutter according to an embodiment.

The electric brush cutter 1 includes a brush cutter main body 100, and a battery pack 200. The electric brush cutter 1 operates by electric power supplied from the battery pack 200 when the detachable battery pack 200 is mounted on the brush cutter main body 100.

The battery pack 200 of this embodiment can assume either a sleep state or an active state. While the battery pack 200 is in the sleep state, the brush cutter main body 100 does not operate even if this pack is mounted on the brush cutter main body 100. When the battery pack 200 is mounted on the brush cutter main body 100 in the active state, the brush cutter main body 100 is operable.

The brush cutter main body 100 includes: a cover member 102 that accommodates a control unit 110 and a motor 104; an operation rod 121 that extends from the cover member 102; a handle 123 attached in a direction orthogonal to the operation rod 121; grips 125 (125a and 125b) provided at left and right ends of the handle 123; a cutter blade 127 attached to the distal end of the operation rod 121; and a protection cover 129 for protecting an operator. The right grip 125a is provided with an operation lever 126. When the operation lever 126 is operated in a state where the power source of the brush cutter main body 100 is on, the cutter blade 127 rotates.

The lower surface of the cover member 102 is provided with the battery holder 190. When the battery pack 200 is mounted on the battery holder 190, the battery pack 200 and the brush cutter main body 100 are electrically coupled to each other.

In view of functionality, the brush cutter main body 100 includes: the control unit 110 for controlling the electric brush cutter 1; and the work unit 130 controlled by the control unit 110 to perform a predetermined operation. The work unit 130 includes, for example, the motor 104, the cutter blade 127, and a drive shaft 106 that is accommodated in the operation rod 121 and transmits the rotation of the motor 104 to the cutter blade 127.

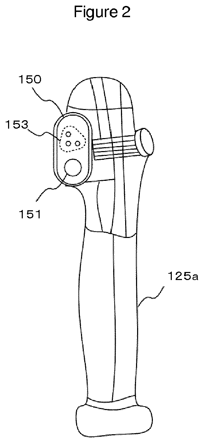

Fig. 2 is a front view of the right grip 125a.

A user interface unit 150 is arranged at the right grip 125a. The user interface unit 150 accepts an input from a user, and provides the user with predetermined information. In this embodiment, the user interface unit 150 includes a power source switch 151, and an LED display unit 153.

The LED display unit 153 may include multiple LED lights, and notify the operator of the state of the electric brush cutter 1 through turning on or off of each light. For example, in this embodiment, turning on or off of the first LED light may indicate whether the power source is on or off, turning on or off of the second LED light may indicate whether or not the state is a high battery state where the battery is charged, and turning on or off of the third LED light may indicate whether or not the state is a low battery state where the battery is insufficiently charged. Furthermore, a blinking pattern of each light, on or off of two or more LED lights, or a combination of blinking may indicate a predetermined state. For example, when the battery pack 200 is in the sleep state, the lights of the LED display unit 153 may be displayed in a state different from any of the high battery and low battery states.

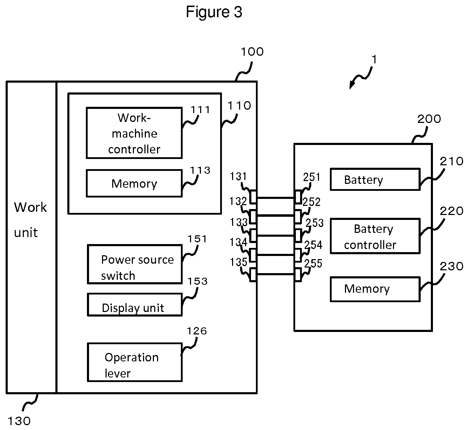

Fig. 3 is a functional block diagram of the electric brush cutter 1 in a case where a battery pack 200 is mounted on the battery holder 190.

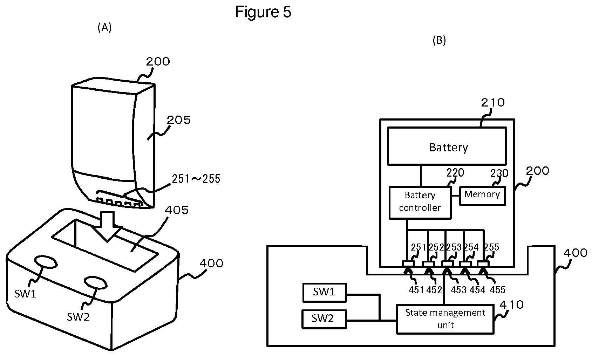

The battery pack 200 includes the battery 210, the battery controller 220, the memory 230, and multiple coupling terminals 251 to 255. The battery 210, the battery controller 220, and the memory 230 are accommodated in a cover member 205 (see Fig. 5). The battery pack 200 is coupled to the brush cutter main body 100 through the multiple terminals 251 to 255 exposed on the surface of the cover member 205.

The battery controller 220 may be achieved by a computer program executed in a predetermined hardware circuit that includes a processor (e.g., CPU (Central Processing Unit)) and a memory.

The battery controller 220 cooperates with a work-machine controller 111 of the brush cutter main body 100 to control the battery 210 while this battery is mounted on the brush cutter main body 100. For example, the battery controller 220 monitors the states of the battery 210, for example, the remaining battery charge and the temperature of the battery, during the work unit 130 being in operation. When the remaining battery charge decreases to be equal to or lower than a predetermined level, or the temperature increases to be a predetermined temperature or higher, the brush cutter main body 100 may be notified through the terminals 252 and 253.

The memory 230 is a memory accessible by the battery controller 220. Information stored therein is updatable. The battery controller 220 manages the information stored in the memory 230. The memory 230 stores the information that indicates the current state of the battery pack 200. The battery pack 200 can assume either of two states, which are the sleep state and the active state, as described above. For example, in the initial state, the battery pack 200 is in the sleep state, and the memory 230 stores information that indicates the sleep state.

The battery controller 220 updates the information stored in the memory 230, according to a signal received through a predetermined interface. For example, the battery controller 220 can update the information stored in the memory 230 from the information indicating the sleep state to the information indicating the active state, and can also update the information from the information indicating the active state to the information indicating the sleep state. The predetermined interface may be the terminal 254.

The battery controller 220 may prohibit the battery 210 from discharging, while the information indicating the sleep state is stored in the memory 230. For example, even while the battery pack 200 is mounted on the brush cutter main body 100, the battery pack 200 may be configured not to provide the power to the brush cutter main body 100 with the battery pack 200 being in the sleep state. The battery controller 220 may allow the battery 210 to discharge, while the information indicating the active state is stored in the memory 230. For example, the battery pack 200 may be configured to provide the power to the brush cutter main body 100 while the battery pack 200 is mounted on the brush cutter main body 100 in the active state.

The battery controller 220 may notify the brush cutter main body 100 of information that is stored in the memory 230 and indicates the state of the battery pack 200. The brush cutter main body 100 may operate according to the information that has been notified from the battery controller 220 and indicates the state of the battery pack 200. In this case, the power may be supplied from the battery pack 200 to the brush cutter main body 100. The brush cutter main body 100 may then grasp whether the state of the battery pack 200 is the active state or the sleep state, and prohibit the work unit 130 from operating in the sleep state. That is, the brush cutter main body 100 may be configured not to operate substantially with the battery pack 200 being mounted on the brush cutter main body 100, while the battery pack 200 is in the sleep state.

The memory 230 can further store date data. For example, the memory 230 may have a region for storing information pertaining to the purchase date or sale date. For example, information indicating the sale date of the battery pack 200 (or purchase date by a customer) can be stored as the date data in the memory 230. The memory 230 may store, as the date data, information indicating a specific day, such as the beginning day of using the battery controller 220. The date data may be stored in the memory 230 when the state of the battery pack 200 is switched from the sleep state to the active state. For example, the date data may be obtained from a state management device 400 (see Fig. 5), which is described later.

The memory 230 may further store the following information. For example, data pertaining to specific data on the brush cutter main body 100 (the serial no., program no., etc.), sales data (the name of a dealer, the date, month and year of sale, etc.), and operation record data (the number of abnormal stops, cumulative operation time, etc.) can be stored as information pertaining to the brush cutter main body 100 (portable electric work machine), in the memory 230. The data pertaining to the specific data on the battery pack (the serial no., program no., etc.), the sales data (the name of a dealer, the date, month and year of sale, etc.), and data (the number of charges and discharges, temperature abnormality, the number of abnormal stops due to over charge and over discharge, the cumulative charge/discharge time, etc.) can stored as the information pertaining to the battery pack 200, in the memory 230.

As described above, the memory 230 can store the operation record data on the brush cutter main body 100, and the usage record data on the battery pack 200. For example, the memory 230 may further include a region for storing information indicating the control result (usage record data) of the battery 210 by the battery controller 220, and a region for storing information indicating the operation result of the brush cutter main body 100 (operation record data). For example, the battery controller 220 performs control while monitoring the state of the battery 210. Upon detection of the temperature abnormality and the over charge and over discharge of the battery 210, the battery controller 220 stores the number of detections thereof, as usage record data, in the memory 230. The battery controller 220 may further record the number of charges, and the cumulative charge time in the memory 230, and increment the number and the time every time of charging. The battery controller 220 may store the information indicating the operation result of the brush cutter main body 100 notified from this brush cutter main body 100 (operation record data), in the memory 230.

The memory 230 may be accessible from the outside of the cover member 205 via a predetermined interface. For example, the work-machine controller 111 of the brush cutter main body 100 may be accessible directly or indirectly to the memory 230, through the terminal 254, described later, or another interface. Furthermore, coupling of the battery pack 200 to a terminal device for a maintenance work and the like through a predetermined interface may allow the terminal device to access the memory 230. For example, the terminal device for the maintenance work may be allowed to obtain the specific data, sales data and operation record data on the brush cutter main body 100, and the specific data, sales data and usage record data on the battery pack 200, which are stored in the memory 230.

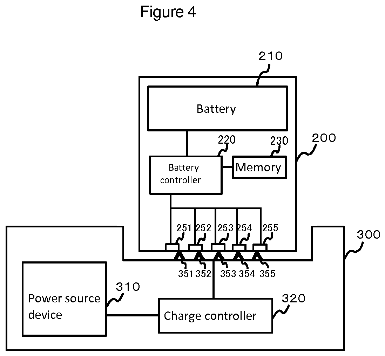

The terminals 251 to 255 may be in contact with the respective corresponding terminals 131 to 135 of the brush cutter main body 100 to couple electrically the brush cutter main body 100 and the battery pack 200 to each other. In this example, the terminal 251 is a positive terminal, and the terminal 255 is a negative terminal. The terminals 252 and 253 are terminals for respectively notifying the brush cutter main body 100 of the temperature abnormality and over discharge abnormality of the battery 210 as abnormal statuses. The terminal 254 is a terminal for bidirectionally transmitting and receiving control signals pertaining to charging of the battery 210 to and from the charger 300 during charging in the charger 300 (see Fig. 4) described later.

The battery controller 220 may transmit and receive signals to and from an external apparatus through a member used during charging of the battery 210 included in the battery pack 200, as an interface. This interface may be, for example, a communication line for transmission and reception of charge control information to and from the charger by the battery pack 200 during battery charging. For example, in this embodiment, the battery controller 220 may transmit and receive predetermined information to and from an external device, such as the brush cutter main body 100, specifically through the terminal 254 as an interface with the outside.

The brush cutter main body 100 includes: the control unit 110 that includes the work-machine controller 111 and a memory 113, the power source switch 151, the LED display unit 153, the operation lever 126, and the work unit 130.

The work-machine controller 111 may be achieved by a computer program executed in a predetermined hardware circuit that includes a processor (e.g., CPU (Central Processing Unit)) and a memory.

The work-machine controller 111 communicates with the battery pack 200 via a member that is used when the battery 210 included in the battery pack 200 is charged. As described above, the member used during charging may be, for example, the communication line for transmission and reception of charge control information to and from the charger by the battery pack 200 during battery charging. For example, the work-machine controller 111 can communicate with the battery controller 220 via the terminals 134 and 254, and may obtain the information stored in the memory 230 via the battery controller 220. The information is, for example, the information indicating the state of the battery controller 220, the date data and the specific data on the battery 210, the sales data, and the usage record data. The obtained information may be stored in the memory 113. Furthermore, the work-machine controller 111 may transmit the specific data on the brush cutter main body 100, the sales data and the operation record data, which are stored in the memory 113, to the battery pack 200 via the terminals 134 and 254.

The work-machine controller 111 controls the work unit 130. The work-machine controller 111 enables the work unit 130 to operate when the information stored in the memory 230 of the battery pack 200 indicates the active state. That is, when a predetermined instruction or input is accepted from the operator with the information stored in the memory 230 of the battery pack 200 indicating the active state, the work-machine controller 111 may operate the work unit 130 by the power supplied from the battery pack 200, in response to the instruction or input. For example, when the operation lever 126 is operated with the battery pack 200 being in the active state, the work-machine controller 111 may control the cutter blade 127 of the work unit 130 to rotate, in response to the operation.

The work-machine controller 111 stores information pertaining to the result of controlling the work unit 130 (operation record data) in the memory 113. For example, the work-machine controller 111 may store the operation time, and the number of occurrences of a predetermined event, as the operation record data, in the work unit 130. The operation record data may contain, for example, the cumulative use time of the work unit 130 (the accumulation of time in which the operation lever 126 has been operated), and the number of abnormal stops of the cutter blade 127.

The work-machine controller 111 may transmit the information stored in the memory 113 to the battery pack 200. For example, at the timing of power on and off of the brush cutter main body 100, the operation record data and the like stored in the memory 113 may be notified to the battery pack 200, and be stored in the memory 230.

The memory 113 stores various pieces of information. For example, the memory 113 may have a region for storing the date data, the specific data on the battery 210, the sales data and the usage record data, the specific data on the work-machine main body 100, the sales data, and the operation record data, which are described above. In the initial state, the memory 113 does not store the date data. The date data may be copied from the battery pack 200 to the memory 113, when the power is turned on at the first time.

Even when the information stored in the memory 230 of the battery pack 200 indicates the sleep state, the power may be supplied to the brush cutter main body 100. However, when the information stored in the memory 230 indicates the sleep state even with the power being supplied, the work-machine controller 111 prohibits the work unit 130 from operating. That is, when the battery pack 200 is in the sleep state even with the operator's operation for the operation lever 126, the work-machine controller 111 does not operate the work unit 130. While the battery pack 200 is in the sleep state, the work-machine controller 111 may display, on the LED display unit 153, a predetermined item that indicates the state of prohibiting the work unit 130 from operating. This display mode may be a display mode different from a display mode indicating the remaining battery charge. For example, the work-machine controller 111 may turn on or blink the LED display unit 153 in a display mode different from that of any of the high battery and low battery.

When the information stored in the memory 230 of the battery pack indicates the sleep state, the power may be prevented from being supplied from the battery pack 200 to the brush cutter main body 100. In this case, the power is not supplied to the work-machine controller 111 either. Consequently, the work-machine controller 111 does not operate. That is, since the work-machine controller 111 does not operate, the work unit 130 is resultantly prohibited from operating.

Fig. 4 is a functional configuration diagram in a case where the battery pack 200 is coupled to a battery charger 300.

The charger 300 includes a power source device 310 that converts commercial AC power into charging DC power, a charge controller 320 that controls the power source device 310, and terminals 351 to 355.

When the battery pack 200 is mounted on the charger 300, the terminals 251 to 255 come into contact with the respective corresponding terminals 351 to 355 of the charger 300. The battery pack 200 is supplied with power from the charger 300 via the positive terminal 251 and the negative terminal 255, and charges the battery 210 under control by the battery controller 220. At this time, the battery controller 220 and the charge controller 320 transmit and receive control signals for charging to and from each other via the terminals 254 and the 354.

The battery controller 220 cooperates with the charge controller 320 to manage charging of the battery 210. For example, the battery controller 220 receives instructions of starting and finishing the charging from the charge controller 320 via the terminals 254 and 354, and controls starting and finishing the charging of the battery 210. The battery controller 220 may monitor the states of the battery 210, for example, the remaining battery charge and the temperature of the battery, during charging. When the remaining battery charge increases to be a predetermined level or higher, the battery controller 220 may notify the brush cutter main body 100 via the terminal 254.

Fig. 5(A) is a configuration diagram of the appearances of the battery pack 200 and a state management device 400 that manages the state of the battery pack 200. Fig. 5(B) is a functional configuration diagram in a case where the battery pack 200 is mounted on the state management device 400.

As shown in Fig. 5(A), the battery pack 200 is covered with the cover member 205, which accommodates the battery 210, the battery controller 220 and the memory 230. The terminals 251 to 255 are exposed from the cover member 205.

The state management device 400 has an insertion hole 405. The bottom of the insertion hole 405 is provided with terminals 451 to 455 serving as coupling means for coupling with the terminals 251 to 255, which are interfaces of the battery pack 200. When the battery pack 200 is inserted into the insertion hole 405, the terminals 451 to 455 provided at the bottom of the insertion hole 405 come into contact with the terminals 251 to 255 of the battery pack 200.

The surface of the state management device 400 is provided with two switches SW1 and SW2 for switching the state of the battery pack 200.

Referring to Fig. 5(B), the state management device 400 includes the switches SW1 and SW2, and a state management unit 410 that manages the state of the battery pack 200.

The state management unit 410 may transmit signals for controlling the state of the battery pack 200, to this battery pack 200. The signals are transmitted via a predetermined interface. Here, when the switches SW1 and SW2 are operated, a predetermined signal for instruction for the state of the battery pack 200 may be transmitted from the state management unit 410 to the battery controller 220 via the terminals 454 and 254 in response to the operation on the switch operation.

For example, when the switch SW1 (activation switch) is pressed, the state management unit 410 may transmit, to the battery pack 200, information on an instruction for activating this battery pack 200. When SW2 (sleep switch) is pressed, the state management unit 410 may transmit, to the battery pack 200, information on an instruction for switching this battery pack 200 to the sleep state.

That is, changing of the state of the battery pack 200 can be freely managed using the state management device 400.

The state management unit 410 may transmit date data that indicates the current day, month and year, to the battery controller 220 via the terminals 454 and 254.

Upon receipt of the date data via the terminal 254, the battery controller 220 may store the received date data in the memory 230. If the date data has already been stored in the memory 230, the date data may be overwritten with the newly obtained date data. The day, month and year indicated by the date data may be, for example, the sale date or purchase date of the battery pack 200, or the date of starting usage.

The state management unit 410 may transmit sales data, together with date data, to the battery controller 220 via the terminals 454 and 254. At this time, the battery controller 220 may store the sales data in the memory 230. The sales data stored in the memory 230 can be output to the outside in the same manner as that of the date data.

In this embodiment, the state of the battery pack 200 is managed by switch operations accepted by the state management device 400. However, the management of the state of the battery pack 200 is not necessarily limited to this scheme. For example, in a case where the state management device 400 includes a numerical keypad, the battery pack 200 may be instructed to change the state upon acceptance of a predetermined authentication code through an operation on the numerical keypad. There are various methods of accepting the authentication code besides a method through the numerical keypad. For example, the state management device 400 may include a barcode or two-dimensional code reader, and this reader may read the authentication code that has been encoded as a barcode or a two-dimensional code. When the state of the battery pack 200 is changed to the active state, the state management device 400 may transmit, to the battery pack 200, the date data indicating the day, month and year at the time.

The state management device 400 is not necessarily the dedicated device as shown in Fig. 5. Alternatively, this device may be included in another device as a partial function of the other device. For example, the state management device 400 may be integrally configured with a POS terminal provided in a store, or be integrally configured with the charger 300. Alternatively, the function of the state management device 400 may be incorporated in a general computer apparatus (a PC, a tablet terminal, a smartphone, etc.). An interface in this case may be wired communication means, such as USB (Universal Serial Bus), or wireless communication means, such as WiFi, Bluetooth (TM) or infrared communication, for the battery pack 200. The battery pack 200 and the general computer apparatus may communicate with each other via such communication means, thereby issuing an instruction for changing the state from the general computer apparatus to the battery pack 200.

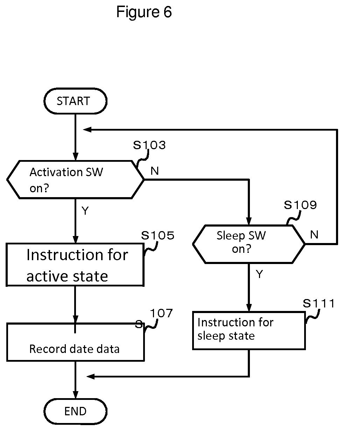

Fig. 6 is a flowchart showing processing procedures performed by the state management device 400 in order to manage the battery pack 200.

First, when the battery pack 200 is mounted on the state management device 400, the state management unit 410 determines whether the activation switch SW1 has been operated or not (S103). If the activation switch SW1 has been operated (S103: Yes), the state management unit 410 notifies the battery pack 200 of an instruction for setting the state of the battery pack 200 to the active state (S105). The battery controller 220 stores the information indicating the active state, in the memory 230, according to the instruction from the state management device 400.

Furthermore, the state management unit 410 transmits the date data indicating the current day, month and year to the battery pack 200 (S107). The battery controller 220 stores, in the memory 230, the date data transmitted from the state management device 400.

Accordingly, if the activation switch SW1 has been pressed, the state of the battery pack 200 is changed to the active state, and the current day, month and year is stored in the memory 230.

On the contrary, if the activation switch SW1 has not been operated (S103: No), the state management unit 410 determines whether the sleep switch SW2 has been operated or not (S109). If the sleep switch SW2 has been operated (S109: Yes), the state management unit 410 notifies the battery pack 200 of an instruction for setting the state of the battery pack 200 to the sleep state (S111). The battery controller 220 stores the information indicating the sleep state, in the memory 230, according to the instruction from the state management device 400.

If the sleep switch SW2 has not been operated (S109: No), the processing returns to step S103.

When the instruction for setting the sleep state or the active state is thus issued from the state management device 400 to the battery pack 200, the state of the battery is changed in the battery pack 200 according to this instruction. For example, the information that has already been stored in the memory 230 and indicates the state of the battery pack 200 may be overwritten with the information indicating the instructed state by the battery controller 220. That is, in a case where the information indicating the sleep state has already been stored in the memory 230, the battery controller 220 may overwrite and store the information indicating the sleep state with the information indicating the active state upon acceptance by the battery pack 200 of the instruction for setting the active state. Likewise, in a case where the information indicating the active state has already been stored in the memory 230, the battery controller 220 may overwrite and store the information indicating the active state with the information indicating the sleep state upon acceptance by the battery pack 200 of the instruction for setting the sleep state.

Accordingly, the user can freely update the state of the battery pack 200 using the state management device 400.

Furthermore, the date data stored in the memory 230 can be read and output to the outside by the battery controller 220. Accordingly, the day, month and year of the sale date (purchase date) or the beginning day of usage of the battery pack 200 can be stored in the battery pack 200 itself.

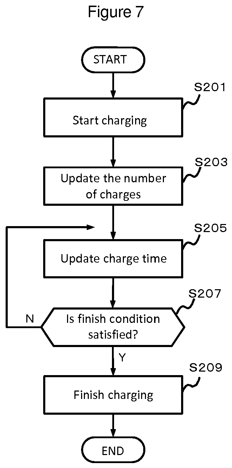

Fig. 7 is a flowchart showing processes performed by the battery pack 200 and the charger 300 while the battery pack 200 is mounted on the charger 300 to charge this charger.

When the battery pack 200 is mounted on the charger 300, the battery controller 220 start charging of the battery 210 according to the instruction of start charging by the charge controller 320 (S201).

The battery controller 220 updates the number of charges stored in the memory 230 (S203). For example, the battery controller 220 increments the number of charges stored in the memory 230 by one.

Furthermore, the battery controller 220 updates the cumulative charge time stored in the memory 230 (S205). For example, the battery controller 220 measures the time elapsed after the battery pack 200 is mounted on the charger 300, and adds the measured time to the cumulative charge time stored in the memory 230.

During charging, the charge controller 320 determines whether a predetermined finish condition is satisfied or not (S207). The finish condition may be, for example, a condition where the battery 210 has an increased temperature that is a predetermined temperature or higher (temperature abnormality), or a condition where the remaining battery charge is a predetermined level or higher. The battery controller 220 repeats step S205 during continuation of charging. Step S205 may be performed at constant time intervals.

When the charge controller 320 detects that the predetermined finish condition is satisfied (S207: Yes), this controller notifies the battery controller 220 of the finish of charging, and finishes the charging (S209).

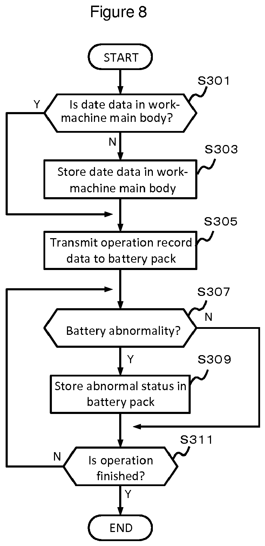

Fig. 8 is a flowchart showing processes performed by the brush cutter main body 100 and the battery pack 200 when the battery pack 200 is mounted on the brush cutter main body 100 and the power source switch 151 is operated to turn on the power source.

The work-machine controller 111 determines whether the date data has already been stored in the memory 113 or not (S301). If the date data has not been stored in the memory 113 (S301: No), the work-machine controller 111 requests the date data stored in the memory 230 from the battery controller 220, obtains the date data, and stores the obtained data in the memory 113 (S303).

If the date data has been stored in the memory 113 (S301: Yes), step S303 is skipped. Accordingly, the date data stored in the memory 113 is not overwritten. A status of prohibiting the memory 113 from being overwritten may be set in the memory 113 when the date data is stored in step S303, in order not to overwrite the data by mistake.

As described above, when the operation using the work unit 130 is performed, the operation record data is stored in the memory 113. The work-machine controller 111 reads the operation record data stored in the memory 113, and transmits the data to the battery pack 200 (S305). In the battery pack 200, the battery controller 220 stores the transmitted operation record data, in the memory 230. Accordingly, operation data having already been recorded in the brush cutter main body 100 is stored in the battery pack 200. At this time, beside the operation record data, the specific data and sales data may be copied to the memory 230.

Here, the work unit 130 becomes in an operable state, and the work-machine controller 111 controls the work unit 130 according to the instruction by the operator. During being in this state, the work-machine controller 111 determines whether the abnormal status has been notified from the battery pack 200 via the predetermined terminal or not (S307). For example, the work unit 130 determines whether a signal indicating the status of temperature abnormality is notified via the terminals 252 and 132 or not, and whether a signal indicating the status of the over discharge abnormality is notified via the terminals 253 and 133 or not.

When the battery abnormal status is notified (S307: Yes), the work-machine controller 111 in turn notifies the battery controller 220 of the notified information indicating the battery abnormal status, via the terminals 134 and 254, and the notified abnormal status is stored as the battery usage data in the memory 230 (S309).

While the battery abnormality is not detected (S307: No), step S309 is skipped.

When the LED display unit 153 is operated and the power is turned off, or when the battery abnormality is detected in step S307, the work-machine controller 111 finishes the operation (S311).

As described above, the brush cutter main body 100 can exchange various pieces of data with the battery pack 200.

Besides such data, various pieces of information stored in the memory 230 of the battery pack 200 can be taken to the outside. For example, when the battery pack 200 is coupled to a management terminal mounted with a predetermined application program via a predetermined interface, the management terminal, which is for example a terminal device for the maintenance work, may perform the following process through the application program. For example, the terminal device for the maintenance work may issue a request to the battery controller 220, and a part of or the entire information stored in the memory 230 may be obtainable. The memory 230 stores, for example, the specific data, the sales data and the usage data on the battery, the specific data, the sales data and the operation record data on the last coupled brush cutter main body 100. The terminal device for the maintenance work may include, for example, a display device, and cause the display device to display the usage history of the battery 210 and the operation history of the brush cutter main body 100 on the basis of the obtained data.

Accordingly, for example, a maintenance operator uses the terminal device to allow the situation analysis of the brush cutter main body 100 and the battery pack 200 to be correctly performed, and allow an appropriate maintenance work to be performed.

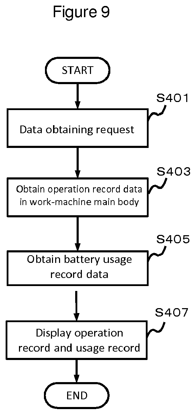

Fig. 9 is a flowchart showing the processing procedures of the terminal device for the maintenance work mounted with the predetermined application program described above.

When the terminal device is coupled to the battery pack 200 first, the terminal device issues a request for obtaining data stored in the memory 230, to the battery pack 200 (S401).

When the battery controller 220 accepts the data obtaining request, the battery pack 200 reads the operation record data on the brush cutter main body 100 from the memory 230, and transmits the data to the terminal device (S403). Furthermore, the battery controller 220 reads the usage record data of the battery 210 from the memory 230, and transmits the data to the terminal device (S405).

The terminal device causes the display device to display the operation record of the brush cutter main body 100 and the usage record of the battery pack 200 on the basis of the data obtained from the battery pack 200 (S407).

Accordingly, the maintenance operator can correctly grasp the states of the brush cutter main body 100 and the battery pack 200.

According to this embodiment, the brush cutter main body is configured not to operate even when the battery pack in the sleep state is mounted on the brush cutter main body, and this configuration can prevent the detachable battery pack of the electric brush cutter from being stolen.

According to this embodiment, in the portable electric work machine to which the battery pack can be attached and detached, data effectively usable for the maintenance work can be obtained from the work-machine main body.

Furthermore, according to this embodiment, in the portable electric work machine to which the battery pack can be attached and detached, the data on the sale date and the purchase date can be stored in the work-machine main body in a manner readable from the outside.

The embodiments of the present invention described above are examples for illustrating the present invention. There is no intention to limit the scope of the present invention only to these embodiments. The person skilled in the art can implement the present invention in other various modes without departing from the gist of the present invention.

### [Reference Signs List]

- 1: Electric brush cutter
- 100: Brush cutter main body
- 111: Work-machine controller
- 113: Memory
- 130: Work unit
- 153: Display unit
- 200: Battery pack
- 210: Battery
- 220: Battery controller
- 230: Memory
- 251-255: Terminals
- 300: Charger
- 400: State management device

## Claims

1. A portable electric work machine, comprising:
a battery pack that comprises a battery, and a first memory that is a memory configured to store predetermined information; and
a work-machine main body configured to be allowed to operate with power being supplied from the battery when the battery pack is mounted,
wherein the work-machine main body comprises:
a work unit for a predetermined operation driven by the power from the battery;
a controller configured to control the work unit; and
a second memory that is a memory accessible from the controller, and
with the battery pack being mounted on the work-machine main body, information corresponding to information related to a purchase date or a sale date stored in the first memory is written in the second memory.

2. A portable electric work machine, comprising:
a battery pack that comprises a first memory that is a memory accessible from a battery and an outside; and
a work-machine main body configured to be allowed to operate with power being supplied from the battery when the battery pack is mounted,
wherein the work-machine main body comprises:
a work unit for a predetermined operation driven by the power from the battery; and
a controller configured to control the work unit,
a second memory that is a memory accessible from the controller, and
when information related to a purchase date or a sale date is not stored in the second memory, the controller writes, in the second memory, the information related to the purchase date or the sale date according to information stored in the first memory.

3. The portable electric work machine according to claim 1 or 2,
wherein the battery pack is in either a sleep state or an active state, and
when the state of the battery pack is switched from the sleep state to the active state, the information related to the purchase date or the sale date of the battery pack is stored in the first memory.

4. The portable electric work machine according to any one of claims 1 to 3, wherein the controller obtains the information stored in the first memory, via a member that is included in the battery pack and is used during charging of the battery.

5. The portable electric work machine according to claim 4, wherein the member used during charging of the battery included in the battery pack is a communication line for allowing the battery pack to transmit and receive charge control information to and from a charger during charging of the battery.

6. A battery pack, comprising:
a cover member;
a battery accommodated in the cover member; and
a memory that is accommodated in the cover member and is configured to store information related to a purchase date and a sale date,
wherein the memory is accessible from an outside of the cover member via a predetermined interface.

7. The battery pack according to claim 6, wherein the predetermined interface is a member configured to be used during charging of the battery.

8. The battery pack according to claim 7, wherein the member used during charging of the battery is a communication line configured to allow the battery pack to transmit and receive charge control information to and from a charger during charging of the battery.

9. The battery pack according to claim 6, wherein the predetermined interface is a USB (Universal Serial Bus).

10. The battery pack according to claim 6, wherein the predetermined interface is wireless communication means.
